(19) Europäisches Patentamt / European Patent Office / Office européen des brevets

(11) **EP 4 672 080 A1**

(12) **EUROPEAN PATENT APPLICATION**

(43) Date of publication:
**31.12.2025 Bulletin 2026/01**

(21) Application number: **25155152.9**

(22) Date of filing: **31.01.2025**

(51) International Patent Classification (IPC):
**G06F 40/30** (2020.01)    **G06F 40/44** (2020.01)
**G06N 3/08** (2023.01)

(52) Cooperative Patent Classification (CPC):
**G06F 40/44; G06F 40/30; G06N 3/045; G06N 3/08; G06N 3/084**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.06.2024 CN 202410825002**

(71) Applicants:
• **BEIJING YOUZHUJU NETWORK TECHNOLOGY CO. LTD.**
**Beijing 101299 (CN)**

• **Lemon Inc.**
**Grand Cayman, KY1-1205 (KY)**

(72) Inventors:
• **SONG, Yuncheng**
**Beijing, 100028 (CN)**
• **CHENG, Shanbo**
**018960 Singapore (SG)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD FOR KNOWLEDGE DISTILLATION, APPARATUS, ELECTRONIC DEVICE, MEDIUM AND COMPUTER PROGRAM PRODUCT**

(57) The present disclosure provides a method for knowledge distillation, an apparatus, an electronic device, a medium and a computer program product. The method includes: acquiring a training source text and a standard translation text corresponding to the training source text; inputting the training source text into a teacher translation model and a student translation model separately, to obtain a teacher distribution output by the teacher translation model and a student distribution output by the student translation model; obtaining a standard translation distribution according to the standard translation text and the training source text; and performing iterative training on the student translation model according to the teacher distribution, the student distribution, and the standard translation distribution, to obtain a target machine translation model.

FIG. 1

## Description

CROSS-REFERENCE TO RELATED APPLICATION

The present application claims priority and benefits to a Chinese patent application No. 202410825002.8, filed on June 25, 2024. The full content of the above Chinese patent application is hereby incorporated by reference as a part of the present application.

TECHNICAL FIELD

Embodiments of the present disclosure relate to a method for knowledge distillation, an apparatus, an electronic device, a medium and a computer program product.

BACKGROUND

Knowledge distillation (Knowledge Distillation, KD) is a model compression method that can transfer knowledge from a teacher model to a student model, so that the student model can reduce model complexity while maintaining performance, and is widely applied to the field of computer vision and the field of natural language processing. For example, knowledge distillation may be applied to machine translation, which is an important branch in the field of natural language processing.

However, due to the limited capability of the student translation model, knowledge of the teacher translation model often cannot be effectively transferred to the student translation model, so that the student translation model cannot have translation performance comparable to that of the teacher translation model.

SUMMARY

Embodiments of the present disclosure provide a method for knowledge distillation, an apparatus, an electronic device, a medium and a computer program product.

An embodiment of the present disclosure provides a method for knowledge distillation. The method includes:

acquiring a training source text and a standard translation text corresponding to the training source text;
inputting the training source text into a teacher translation model and a student translation model separately, to obtain a teacher distribution output by the teacher translation model and a student distribution output by the student translation model;
obtaining a standard translation distribution according to the standard translation text and the training source text; and
performing iterative training on the student translation model according to the teacher distribution, the student distribution, and the standard translation distribution, to obtain a target machine translation model.

An embodiment of the present disclosure provides a knowledge distillation apparatus. The apparatus includes:

a sample acquiring module, configured to acquire a training source text and a standard translation text corresponding to the training source text;
a first processing module, configured to input the training source text into a teacher model and a student translation model separately, to obtain a teacher distribution output by the teacher model and a student distribution output by the student translation model;
a second processing module, configured to obtain a standard translation distribution according to the standard translation text and the training source text; and
a knowledge distillation module, configured to perform iterative training on the student translation model according to the teacher distribution, the student distribution, and the standard translation distribution, to obtain a target machine translation model.

An embodiment of the present disclosure provides an electronic device. The electronic device includes:

a processor and a memory, where the memory is configured to store a computer program, and the processor is configured to invoke and run the computer program stored in the memory, to perform the method for knowledge distillation according to the first aspect.

An embodiment of the present disclosure provides a computer-readable storage medium, configured to store a computer program, where the computer program causes a computer to perform the method for knowledge distillation described above.

An embodiment of the present disclosure provides a computer program product including program instructions. When the program instructions are run on an electronic device, the electronic device is caused to perform the method for knowledge distillation described above.

BRIEF DESCRIPTION OF DRAWINGS

To illustrate the technical solutions in the embodiments of the present disclosure more clearly, the following briefly introduces the drawings required for describing the embodiments. Apparently, the drawings in the following description show merely some embodiments of the present disclosure, and a person of ordinary skill in the art may derive other drawings from these drawings without creative efforts.

FIG. 1 is a schematic diagram of a knowledge distillation scenario according to an embodiment of the present disclosure.

FIG. 2 is a flowchart of a method for knowledge distillation according to an embodiment of the present disclosure.

FIG. 3 is a flowchart of training a student translation model according to an embodiment of the present disclosure.

FIG. 4 is a schematic block diagram of a knowledge distillation apparatus according to an embodiment of the present disclosure.

FIG. 5 is a schematic block diagram of an electronic device according to an embodiment of the present disclosure.

DETAILED DESCRIPTION

The technical solutions in the embodiments of the present disclosure are clearly and completely described below with reference to the drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

It should be noted that the terms such as "first" and "second" in this specification and the claims and in the above drawings of the present disclosure are intended to distinguish between similar objects but do not necessarily indicate a specific order or sequence. It should be understood that the data termed in such a way are interchangeable in proper circumstances so that the embodiments of the present disclosure described here can be implemented in other orders than the order illustrated or described here. In addition, the terms "include/comprise" and "have" and any variations thereof in this specification and the claims are intended to cover a non-exclusive inclusion. For example, a process, method, system, product, or server that includes a series of steps or units is not limited to those steps or units that are expressly listed, but may include other steps or units not expressly listed or inherent to such a process, method, system, product, or server.

In the embodiments of the present disclosure, the word such as "exemplarily" or "for example" is used to represent giving an example, an illustration, or a description. Any embodiment or solution described as "exemplarily" or "for example" in the embodiments of the present disclosure should not be construed as being more preferred or advantageous than other embodiments or solutions. Rather, the word such as "exemplarily" or "for example" is used to present a related concept in a specific manner.

In the description of the embodiments of the present disclosure, unless otherwise specified, "a plurality of" or "a variety of" refers to two or more, that is, at least two. "At least one" refers to one or more.

In the related art, because knowledge distillation can transfer knowledge from a teacher model to a student translation model, so that the student translation model can reduce model complexity while maintaining performance, knowledge distillation can be applied to machine translation, which is a branch in the field of natural language processing. However, due to the limited capability of the student translation model, knowledge of the teacher translation model often cannot be effectively transferred to the student translation model, so that the student translation model cannot have translation performance comparable to that of the teacher translation model.

To solve the above technical problem, the present disclosure provides a method for knowledge distillation and apparatus, a device, and a medium, which can effectively transfer knowledge of a teacher translation model to a student translation model, so that the student translation model can obtain translation performance comparable to that of the teacher model.

The technical solutions of the present disclosure are described in detail below through some embodiments. The embodiments described below may be combined with each other, and the same or similar concepts or processes may not be described in detail in some embodiments.

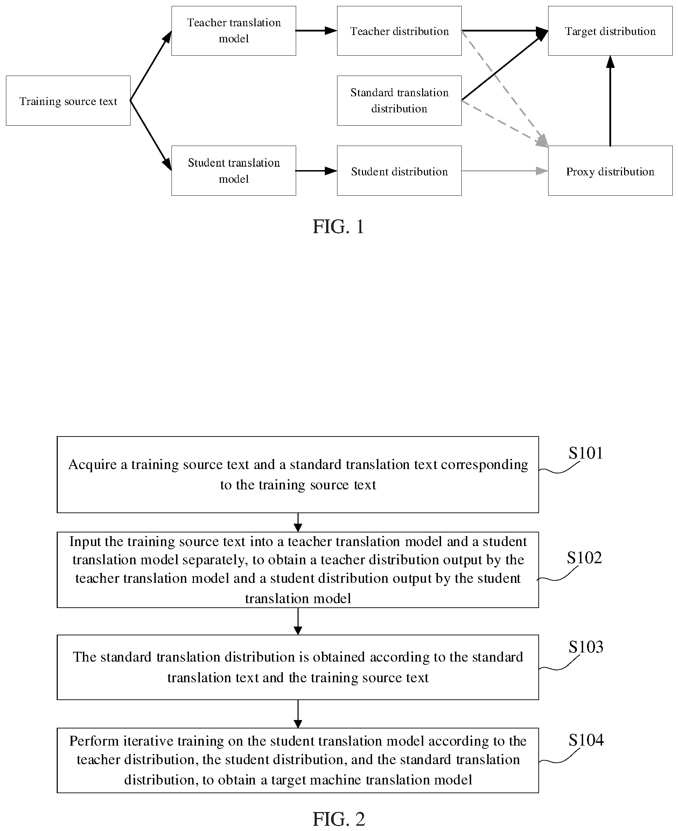

FIG. 1 is a schematic diagram of a knowledge distillation scenario according to an embodiment of the present disclosure. FIG. 2 is a flowchart of a method for knowledge distillation according to an embodiment of the present disclosure. The embodiments of the present disclosure may be applied to a knowledge learning scenario of a machine translation model. The method for knowledge distillation may be performed by a knowledge distillation apparatus, and the apparatus may be composed of hardware and/or software, and may be integrated into an electronic device. In the present disclosure, the electronic device may be a server, a notebook computer, a personal desktop computer, a computer device, etc., and a type of the electronic device is not limited here.

As shown in FIG. 2, the method may include the following steps.

S101: acquire a training source text and a standard translation text corresponding to the training source text.

In some optional embodiments, the training source text and the standard translation text corresponding to the training source text may be manually edited, or any other acquisition manner may be used, for example, the training source text and the standard translation text corresponding to the training source text are acquired from open-source training corpus, etc., which is not specifically limited in the present disclosure.

In the present disclosure, a plurality of training source texts and standard translation texts may be acquired, that is, a training sample set may be acquired in the present disclosure. Moreover, each group of training source text and standard translation text in a training sample may be understood as parallel corpus.

Exemplarily, the parallel corpus may be as follows.

Source text 1: 我喜欢春天 (Chinese original text); standard translation text 1: I like spring;

Source text 2:这是一只猫 (Chinese original text); standard translation text 2: This is a cat.

Considering that each training source text and standard translation text in the training sample set have the same training process for the student translation model. For example, in each training process, one training source text is input into the student translation model and the teacher translation model. After the training source text is completely trained, a next training source text is input and training is started again. Therefore, to facilitate description of the technical solutions of the present disclosure, in the following embodiments, an example in which one training source text is used is used to describe the training process of the student translation model.

S 102: input the training source text into a teacher translation model and a student translation model separately, to obtain a teacher distribution output by the teacher translation model and a student distribution output by the student translation model.

In the present disclosure, the teacher translation model is a machine translation model that has been trained in advance, and the student translation model is a machine translation model to be trained. The machine translation model to be trained may be understood as an initial machine translation model or an untrained student model.

The teacher translation model is in a prediction mode, and the prediction mode freezes a model parameter of the teacher translation model, so that the model parameter of the teacher translation model is not modified in the process of training the student translation model. The student translation model is in a training mode, that is, in the process of training the student translation model, a model parameter in the student translation model may be modified.

In addition, a capacity and a scale of the teacher translation model are greater than a capacity and a scale of the student translation model.

As an optional implementation, in the present disclosure, both the teacher translation model and the student translation model may be selected as large language models. It should be understood that the Large Language Model (LLM) is a deep learning model that is trained based on a large amount of training data, and may be proficient in a language processing task, such as a translation task or text generation.

In addition, the teacher translation model and the student translation model in the present disclosure may implement language translation for any language pair, such as Chinese-to-English, English-to-German, German-to-French, and so on.

In some optional embodiments, the acquired training source text may be used as input data, and separately input into the teacher translation model and the student translation model shown in FIG. 1, so that the teacher translation model and the student translation model separately perform word segmentation on the training source text to obtain word sequences, and then process the word sequences, to obtain the teacher distribution output by the teacher translation model and the student distribution output by the student translation model.

In some optional embodiments, the word segmentation performed by the teacher translation model and the student translation model on the training source text may be implemented by a preset word segmentation method, where the preset word segmentation method may be but is not limited to a Byte Pair Encoder (BPE) algorithm and the like. The BPE algorithm is a data compression algorithm, which is used to implement variable-length subwords in a fixed-size vocabulary. The specific implementation process is to split a word into a single character, and then replace a pair of characters with the highest frequency with another character in turn, and repeat this operation until the number of words in the vocabulary reaches a preset value or the frequency of occurrence of the next highest-frequency byte pair is 1.

In the present disclosure, the teacher distribution may be selected as a first candidate word probability distribution, and the student distribution may be selected as a second candidate word probability distribution. The first candidate word probability distribution includes knowledge of the teacher translation model, and the second candidate word probability distribution includes knowledge of the student translation model.

In addition, each of the above candidate word probability distributions corresponds to one translation candidate word.

Each translation candidate word may be represented as a token. That is, one token corresponds to a probability distribution of a vocabulary size. It should be understood that the above token may also represent a position where the translation candidate word is located.

In addition, in the training process of the student translation model, in the present disclosure, a translation word segmentation sequence may be obtained according to the standard translation text, and then n word probability distributions are generated according to a size n of the translation word segmentation sequence. Each word segmentation in the translation word segmentation sequence corresponds to one word probability distribution. Because the position corresponding to each word segmentation is unique and fixed, it may be determined that each position in the translation word segmentation sequence corresponds to one word probability distribution. That is, each word segmentation in the translation word segmentation sequence and a word probability distribution corresponding to a position where each word segmentation is located are the same.

It should be understood that the above one word probability distribution represents a prediction, by a model, of all possibilities of selecting a target translation word segmentation for one position. The model includes the student translation model and the teacher translation model.

For example, it is assumed that the training source text is "我喜欢春天" (Chinese original text), an original word segmentation sequence of the training source text is [我 喜欢 春天], and a translation word segmentation sequence corresponding to the original word segmentation sequence [我 喜欢 春天] is [I like spring], where "I" is a word segmentation located at a first position, "like" is a word segmentation located at a second position, and "spring" is a word segmentation located at a third position. Then, it may be determined, according to the three positions, that the teacher translation model and the student translation model separately generate three candidate word probability distributions. Each of the three positions corresponds to one candidate word probability distribution.

Then, when a vocabulary is [我 喜欢 春天 I like spring], it is determined that a size of the vocabulary is 6. In this case, based on the vocabulary with the size of 6, a first candidate word probability distribution (that is, the teacher distribution) output by the teacher translation model at the first position may be {0.1, 0.2, 0.1, 0.4, 0.1, 0.1}, a first candidate word probability distribution output by the teacher translation model at the second position may be {0.1, 0.2, 0.1, 0.2, 0.3, 0.1}, and a first candidate word probability distribution output by the teacher translation model at the third position may be {0.2, 0.1, 0.2, 0.1, 0.1, 0.4}; likewise, a second candidate word probability distribution (that is, the student distribution) output by the student translation model at the first position may be {0.4, 0.2, 0.1, 0.1, 0.1, 0.1}, a second candidate word probability distribution output by the student translation model at the second position may be {0.1, 0.3, 0.1, 0.1, 0.2, 0.2}, and a second candidate word probability distribution output by the student translation model at the third position may be {0.2, 0.1, 0.4, 0.1, 0.1, 0.1}.

In S103, the standard translation distribution is obtained according to the standard translation text and the training source text.

In some optional embodiments, word segmentation may be performed on the standard translation text, to obtain a translation word segmentation sequence, and word segmentation is performed on the training source text, to obtain an original word segmentation sequence. Then, a target vocabulary is obtained according to the translation word segmentation sequence and the original word segmentation sequence. Furthermore, one-hot encoding is performed on the translation word segmentation sequence according to the target vocabulary, to obtain the standard translation distribution.

It should be understood that one-hot encoding is an effective encoding. N-bit status register is used to encode N states, each state corresponds to an independent register bit, and at any time, there is only one valid bit.

Exemplarily, it is assumed that the training source text is "我喜欢春天" (Chinese original text), and the standard translation text is "I like spring". Then, word segmentation may be first performed on "我 喜欢春天" by using a preset word segmentation method, to obtain an original word segmentation sequence [我 喜欢 春天], and word segmentation is performed on "I like spring" by using the preset word segmentation method, to obtain a translation word segmentation sequence: [I like spring]. Because a size of the original word segmentation sequence is 3, and a size of the translation word segmentation sequence is 3, a size of the target vocabulary is calculated to be 3+3=6 according to the size of the original word segmentation sequence and the size of the translation word segmentation sequence. That is, N in the N-bit status register is equal to 6. In addition, the target vocabulary is specifically [我 喜欢 春天 I like spring]. Then, one-hot encoding is performed on a word segmentation at each position in the translation word segmentation sequence according to the size 6 of the target vocabulary, to obtain a standard translation distribution corresponding to each position. Specifically, a standard translation distribution corresponding to a first position in the translation word segmentation sequence is {0, 0, 0, 1, 0, 0}, a standard translation distribution corresponding to a second position in the translation word segmentation sequence is {0, 0, 0, 0, 1, 0}, and a standard translation distribution corresponding to a third position in the translation word segmentation sequence is {0, 0, 0, 0, 0, 1}.

It should be noted that the execution sequence of S102 and S103 may be to execute S102 first and then execute S103; or to execute S103 first and then execute S102; or to execute S102 and S103 at the same time, which is not specifically limited in the present disclosure.

S104: perform iterative training on the student translation model according to the teacher distribution, the student distribution, and the standard translation distribution, to obtain a target machine translation model.

In some optional embodiments, a target distribution may be first calculated according to the teacher distribution and the standard translation distribution corresponding to each position. The target distribution may be understood as a third candidate word probability distribution. Then, an error between the target distribution corresponding to each position and the student distribution is determined. In addition, whether the error between the target distribution corresponding to each position and the student distribution is greater than a preset error is determined. When the error between the target distribution corresponding to any position and the student distribution is less than or equal to the preset error, it indicates that these positions are easy to learn or easy to distill (that is, word segmentations at these positions are easy to learn or easy to distill). When the error between the target distribution corresponding to any position and the student distribution is greater than the preset error, it indicates that the position is difficult to distill or difficult to learn for the student translation model (that is, word segmentations at these positions are difficult to learn or difficult to distill). In this case, these difficult-to-learn positions are selected. Thereafter, the target distribution corresponding to the selected difficult-to-learn position is exposed to the student translation model, so that the student translation model learns word segmentations at the above difficult-to-learn position based on the exposed target distribution, to help the student translation model learn word segmentations at the difficult-to-learn position, so that the student translation model can obtain the knowledge of the teacher translation model, and thus has translation capability comparable to that of the teacher translation model.

In the present disclosure, the preset error may be set according to model translation precision, and there is no specific limitation here.

Exemplarily, it is assumed that a target vocabulary is [我 喜欢 春天 I like spring], and a translation word segmentation sequence corresponding to the standard translation text is [I like spring]. In this case, it may be determined that a word segmentation corresponding to a first position is "I". When a target distribution corresponding to "I" is {0.05, 0.1, 0.05, 0.7, 0.05, 0.05}, and a student distribution corresponding to "I" is {0.4, 0.2, 0.1, 0.1, 0.1, 0.1}, it may be determined that a word segmentation corresponding to a highest probability in the target distribution corresponding to "I" is "我", and a word segmentation corresponding to a highest probability in the student distribution corresponding to "I" is "I", and then an error value calculated according to the target distribution and the student distribution corresponding to "I" is greater than the preset error. Then, it may be determined that the student translation model has not achieved good translation performance, that is, it is determined that the word segmentation "I" located at the first position is difficult to learn for the student translation model. In this case, the target distribution corresponding to the word segmentation "I" located at the first position is exposed to the student translation model, so that the student translation model learns the difficult-to-learn word segmentation "I" located at the first position based on the target distribution corresponding to the word segmentation "I" located at the first position.

In some optional embodiments, after the trained student translation model is obtained, the student translation model may be used as the target machine translation model in the present disclosure. In addition, the target machine translation model may also be deployed on any device to perform a machine translation operation.

According to the technical solution disclosed in the embodiments of the present disclosure, the acquired training source text is input into the teacher translation model and the student translation model separately, to obtain the teacher distribution output by the teacher translation model and the student distribution output by the student translation model, and the standard translation distribution is obtained according to the acquired standard translation text and the training source text, and then the student translation model is iteratively trained according to the teacher distribution, the student distribution, and the standard translation distribution, to obtain the target machine translation model. In the present disclosure, the training process of the student translation model is supervised by using the teacher distribution output by the teacher translation model and the standard translation distribution corresponding to the standard translation text, so that the knowledge of the teacher translation model can be effectively transferred to the student translation model, and the student translation model can obtain translation performance comparable to that of the teacher model.

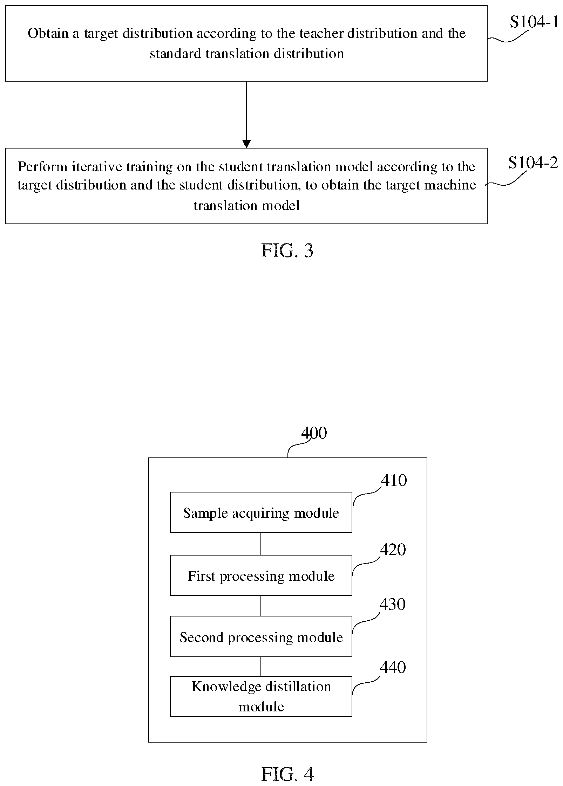

The method for knowledge distillation provided in the embodiments of the present disclosure is further explained below with reference to FIG. 3. As shown in FIG. 3, S 104 shown in FIG. 2 may further include the following S104-1 and S104-2.

S104-1: obtain a target distribution according to the teacher distribution and the standard translation distribution.

In some optional embodiments, an average value of the teacher distribution and the standard translation distribution corresponding to each of the n positions may be calculated according to a size n of the translation word segmentation sequence, and the average value is used as the target distribution corresponding to each position.

As an optional implementation, the target distribution corresponding to each position may be calculated by the following formula (1).

$$p_{toh_i} = \frac{p_{t_i} + p_{oh_i}}{2} \quad \text{...............} \ (1)$$

$p_{toh_i}$ is the target distribution corresponding to the ith position, $p_{t_i}$ is the teacher distribution corresponding to the ith position, and $p_{oh_i}$ is the standard translation distribution corresponding to the ith position, where i is greater than or equal to 1, and i is less than or equal to the size n of the translation word segmentation sequence.

S104-2: perform iterative training on the student translation model according to the target distribution and the student distribution, to obtain the target machine translation model.

In some optional embodiments, the performing iterative training on the student translation model according to the target distribution and the student distribution, to obtain the target machine translation model may include the following steps.

Step 1: obtain a first loss value according to an error between the target distribution and the student distribution.

In some optional embodiments, the error between the target distribution corresponding to each position and the student distribution is calculated, and the error is used as the first loss value.

As an optional implementation, the error (the first loss value) between the target distribution corresponding to each position and the student distribution corresponding to each position may be calculated by the following formula (2).

$$L_{kl'_i} = KL\left(p_{s_i}, p_{toh_i}\right) \quad \text{......................} (2)$$

$L_{kl'_i}$ i is the first loss value between the target distribution corresponding to the ith position and the student distribution corresponding to the ith position, KL is relative entropy, also referred to as KL divergence, $p_{s_i}$ is the student distribution corresponding to the ith position, and $p_{toh_i}$ is the target distribution corresponding to the ith position.

Exemplarily, it is assumed that a target vocabulary is [I like singing 我 喜欢 唱歌] (Chinese original text), and a translation word segmentation sequence corresponding to the standard translation text is [我 喜欢 唱歌]. Then, when the first loss value corresponding to "喜欢" (Chinese original text) located at the second position is determined, the above formula (2) is specifically: $L_{kl'_2} = KL(p_{s_2}, p_{toh_2})$. $L_{kl'_2}$ is the first loss value between the target distribution and the student distribution corresponding to "喜欢" located at the second position, that is, $L_{kl'_2}$ is the first loss value corresponding to the second position, $p_{s_2}$ is the student distribution corresponding to the second position, and $p_{toh_2}$ is the target distribution corresponding to the second position.

Step 2: select a target word segmentation and a non-target word segmentation from the translation word segmentation sequence corresponding to the standard translation text according to the first loss value and a preset threshold.

The preset threshold may be set according to model translation precision, and there is no specific limitation here.

In addition, the target word segmentation may be understood as a word segmentation that is difficult to learn or difficult to distill, and the non-target word segmentation may be understood as a word segmentation that is easy to learn or easy to distill.

In some optional embodiments, the first loss value corresponding to each position may be compared with the preset threshold, to determine word segmentations that are difficult to learn at which positions, and word segmentations that are easy to learn at which positions. When the first loss value corresponding to any position is greater than the preset threshold, it indicates that the word segmentation located at the position is difficult to learn. In this case, the same position is determined from the translation word segmentation sequence corresponding to the standard translation text according to the position where the difficult-to-learn word segmentation is located, and the word segmentation at the same position is determined as the target word segmentation. When the first loss value corresponding to any position is less than or equal to the preset threshold, it indicates that the word segmentation located at the position is easy to learn. In this case, the same position is determined from the translation word segmentation sequence corresponding to the standard translation text according to the position where the easy-to-learn word segmentation is located, and the word segmentation at the same position is determined as the non-target word segmentation.

The selecting, from the translation word segmentation sequence corresponding to the standard translation text, the target word segmentation and the non-target word segmentation includes: when the first loss value between the target distribution and the student distribution corresponding to the word segmentation at any position is greater than the preset threshold, determining a first target position from the translation word segmentation sequence corresponding to the standard translation text according to the position, and determining the word segmentation located at the first target position as the target word segmentation; and when the first loss value between the target distribution and the student distribution corresponding to the word segmentation at any position is less than or equal to the preset threshold, determining a second target position from the translation word segmentation sequence corresponding to the standard translation text according to the position, and determining the word segmentation located at the second target position as the non-target word segmentation.

Step 3: determine a proxy distribution corresponding to the target word segmentation and a proxy distribution corresponding to the non-target word segmentation.

Considering that the target distribution is a combination of the teacher distribution and the standard translation distribution, to help the student translation model learn the above difficult-to-learn target word segmentation, in the present disclosure, the target distribution corresponding to the target word segmentation may be exposed to the student translation model, so that the student translation model continues to learn the difficult-to-learn target word segmentation based on the exposed target distribution.

In some optional embodiments, the target distribution corresponding to the target word segmentation is exposed to the student translation model by determining the proxy distribution corresponding to the target word segmentation and the proxy distribution corresponding to the non-target word segmentation, and then the student translation model is trained according to the target distribution corresponding to the target word segmentation and the proxy distribution corresponding to the target word segmentation, and the target distribution corresponding to the non-target word segmentation and the proxy distribution corresponding to the non-target word segmentation, so that the student translation model can learn the above difficult-to-learn target word segmentation.

In some optional embodiments, the proxy distribution corresponding to the target word segmentation may be determined according to the target distribution corresponding to the target word segmentation and the student distribution corresponding to the target word segmentation.

As an optional implementation, the above determining the proxy distribution corresponding to the target word segmentation may be implemented by the following formula (3).

$$p_{m_j} = \frac{1}{3} * p_{s_j} + \frac{2}{3} * p_{toh_j} \quad\text{.........................} \ (3)$$

$p_{m_j}$ is the proxy distribution corresponding to the target word segmentation located at the jth position, that is, the proxy distribution corresponding to the jth position, $p_{s_j}$ is the student distribution corresponding to the jth position, and $p_{toh_j}$ is the target distribution corresponding to the jth position, where j is greater than or equal to 1, and j is less than or equal to the size n of the translation word segmentation sequence.

It should be understood that $p_{s_j}$ is the student distribution corresponding to the target word segmentation located at the jth position, and $p_{toh_j}$ is the target distribution corresponding to the target word segmentation located at the jth position.

In some optional embodiments, when the proxy distribution corresponding to the non-target word segmentation is determined in the present disclosure, because the non-target word segmentation is a word segmentation that is easy to learn, the student distribution corresponding to the non-target word segmentation may be determined as the proxy distribution corresponding to the non-target word segmentation.

As an optional implementation, the determining the proxy distribution corresponding to the non-target word segmentation may be implemented by the following formula (4).

$$p_{m_k} = p_{s_k} \quad\text{.........................} \ (4)$$

$p_{m_k}$ is the proxy distribution corresponding to the non-target word segmentation located at the kth position, that is, the proxy distribution corresponding to the kth position, and $p_{s_k}$ is the student distribution corresponding to the kth position, where k is different from j, that is, $k \neq j$, and k is greater than or equal to 1 and less than or equal to the size n of the translation word segmentation sequence.

Step 4: perform iterative training on the student translation model according to the target distribution corresponding to the target word segmentation and the proxy distribution corresponding to the target word segmentation, and the target distribution corresponding to the non-target word segmentation and the proxy distribution corresponding to the non-target word segmentation, to obtain the target machine translation model.

In some optional embodiments, the performing iterative training on the student translation model according to the target distribution corresponding to the target word segmentation and the proxy distribution corresponding to the target word segmentation, and the target distribution corresponding to the non-target word segmentation and the proxy distribution corresponding to the non-target word segmentation may be implemented by the following steps.

Step A1: obtain a second loss value according to an error between the target distribution corresponding to the target word segmentation and the proxy distribution corresponding to the target word segmentation.

In some optional embodiments, the error (that is, the second loss value) between the target distribution corresponding to the target word segmentation and the proxy distribution corresponding to the target word segmentation may be determined by the following formula (5).

$$L_{ekd_j} = KL\left(p_{m_j}, p_{toh_j}\right) \quad\text{.................} (5)$$

$L_{ekd_j}$ is the second loss value between the target distribution corresponding to the target word segmentation and the proxy distribution corresponding to the target word segmentation located at the jth position, that is, the second loss value corresponding to the jth position, KL is KL divergence, $p_{m_j}$ is the proxy distribution corresponding to the jth position, and $p_{toh_j}$ is the target distribution corresponding to the jth position.

In the present disclosure, $p_{m_j} = \frac{1}{3} * p_{s_j} + \frac{2}{3} * p_{toh_j}$, $p_{toh_j} = \frac{p_{t_j} + p_{oh_j}}{2}$.

Step A2: obtain a third loss value according to an error between the target distribution corresponding to the non-target word segmentation and the proxy distribution corresponding to the non-target word segmentation.

In some optional embodiments, the error (that is, the third loss value) between the target distribution corresponding to the non-target word segmentation and the proxy distribution corresponding to the non-target word segmentation may be determined by the following formula (6).

$$L_{ekd_k} = KL\left(p_{m_k}, p_{toh_k}\right) \quad \ldots\ldots\ldots\ldots(6)$$

$L_{ekd_k}$ is the third loss value between the target distribution corresponding to the non-target word segmentation and the proxy distribution corresponding to the non-target word segmentation located at the kth position, that is, the third loss value corresponding to the kth position, KL is KL divergence, $p_{m_k}$ is the proxy distribution corresponding to the kth position, and $p_{toh_k}$ is the target distribution corresponding to the kth position.

In the present disclosure, $p_{m_k} = p_{s_k}$, $p_{toh_k} = \dfrac{p_{t_k} + p_{oh_k}}{2}$, and $p_{tohk} \in p_{tohi}$. Therefore, the above formula (6) may be changed into formula (7).

$$L_{ekd_k} = L_{kl'_k} = KL\left(p_{s_k}, p_{toh_k}\right) \quad \ldots\ldots\ldots\ldots (7)$$

It can be learned from the above formula (7) that the third loss value between the target distribution corresponding to the non-target word segmentation and the proxy distribution corresponding to the non-target word segmentation is the same as the first loss value between the target distribution corresponding to the kth position and the student distribution corresponding to the kth position determined by the above formula (2).

It should be noted that the execution sequence of the above step A1 and step A2 may be to execute step A1 first and then execute step A2; or to execute step A2 first and then execute step A1; or to execute step A1 and step A2 at the same time, which is not specifically limited in the present disclosure.

Step A3: perform iterative training on the student translation model according to the second loss value and the third loss value, to obtain the target machine translation model.

In some optional embodiments, the iterative training is performed on the student translation model according to the second loss value corresponding to the target word segmentation located at the jth position and the third loss value corresponding to the non-target word segmentation located at the kth position. Specifically, the second loss value and the third loss value are added to obtain a sum, and the sum is used as a total loss value of the student translation model. Then, the iterative training is performed on the student translation model according to the total loss value, to obtain the target machine translation model.

In the present disclosure, the total loss value of the student translation model may be determined as shown in the following formula (8).

$$L = \frac{1}{n}\left(\sum_k L_{kl'_k} + \sum_j L_{ekd_j}\right) \quad \ldots\ldots\ldots\ldots (8)$$

$L$ is the total loss value of the student translation model, $n$ is the size of the translation word segmentation sequence, $L_{kl'}$ is the first loss value, $L_{kl'_k}$ is the third loss value corresponding to the kth position, and the word segmentation at the kth position is an easy-to-learn word segmentation, $L_{ekd_j}$ is the second loss value corresponding to the jth position, and the word segmentation at the jth position is a difficult-to-learn word segmentation, where $k \in R$, R is a set of positions of easy-to-learn word segmentations in the translation word segmentation sequence, $j \in M$, M is a set of positions of difficult-to-learn word segmentations in the translation word segmentation sequence, and a sum of the set R and the set M is equal to the size n of the translation word segmentation sequence.

In the present disclosure, the iterative training is performed on the student translation model according to the total loss value by performing reverse training on the student translation model according to the total loss value, for example, adjusting the model parameter in the student translation model, and repeating Step 1 to Step 4, until the student translation model converges or a preset number of iterations is reached, to obtain the target machine translation model.

The student translation model converges may mean that the total loss value is less than a preset value.

In addition, the preset value and the preset number of iterations may be flexibly set according to translation performance of the student translation model. For example, when it is desired to obtain a target machine translation model with higher accuracy, the preset value may be set to be smaller or the preset number of iterations may be set to be larger. Conversely, the preset value may be set to be relatively large or the preset number of iterations may be set to be relatively small, which is not specifically limited in the present disclosure.

According to the technical solution disclosed in the embodiments of the present disclosure, the acquired training source text is input into the teacher translation model and the student translation model separately, to obtain the teacher distribution output by the teacher translation model and the student distribution output by the student translation model, and the standard translation distribution is obtained according to the acquired standard translation text and the training source text, and then the student translation model is iteratively trained according to the teacher distribution, the student distribution, and the standard translation distribution, to obtain the target machine translation model. In the present disclosure, the training process of the student translation model is supervised by using the teacher distribution output by the teacher translation model and the standard translation distribution corresponding to the standard translation text, so that the knowledge of the teacher translation model can be effectively transferred to the student translation model, and the student translation model can obtain translation performance comparable to that of the teacher model.

Referring to FIG. 4 below, a knowledge distillation apparatus according to an embodiment of the present disclosure is described. As shown in FIG. 4, the knowledge distillation apparatus 400 includes a sample acquiring module 410, a first processing module 420, a second processing module 430, and a knowledge distillation module 440.

The sample acquiring module 410 is configured to acquire a training source text and a standard translation text corresponding to the training source text.

The first processing module 420 is configured to input the training source text into a teacher model and a student translation model separately, to obtain a teacher distribution output by the teacher model and a student distribution output by the student translation model.

The second processing module 430 is configured to obtain a standard translation distribution according to the standard translation text and the training source text.

The knowledge distillation module 440 is configured to perform iterative training on the student translation model according to the teacher distribution, the student distribution, and the standard translation distribution, to obtain a target machine translation model.

According to an optional implementation of the embodiment of the present disclosure, the knowledge distillation module 440 includes a distribution determining unit and a training unit.

The distribution determining unit is configured to obtain a target distribution according to the teacher distribution and the standard translation distribution.

The training unit is configured to perform iterative training on the student translation model according to the target distribution and the student distribution, to obtain a target machine translation model.

According to an optional implementation of the embodiment of the present disclosure, the training unit is further configured to:

obtain a first loss value according to an error between the target distribution and the student distribution;
select a target word segmentation and a non-target word segmentation from a translation word segmentation sequence corresponding to the standard translation text according to the first loss value and a preset threshold;
determine a proxy distribution corresponding to the target word segmentation and a proxy distribution corresponding to the non-target word segmentation; and
perform iterative training on the student translation model according to the target distribution corresponding to the target word segmentation and the proxy distribution corresponding to the target word segmentation, and the target distribution corresponding to the non-target word segmentation and the proxy distribution corresponding to the non-target word segmentation, to obtain the target machine translation model.

According to an optional implementation of the embodiment of the present disclosure, the training unit is further configured to:

when the first loss value between the target distribution corresponding to the word segmentation at a first position and the student distribution corresponding to the word segmentation at the first position is greater than the preset threshold, determine a first target position from the translation word segmentation sequence corresponding to the standard translation text according to the first position, and determine the word segmentation located at the first target position as the target word segmentation; and
when the first loss value between the target distribution corresponding to the word segmentation at the first position and the student distribution corresponding to the word segmentation at the first position is less than or equal to the preset threshold, determine a second target position from the translation word segmentation sequence corresponding to the standard translation text according to the first position, and determine the word segmentation located at the second target position as the non-target word segmentation; where the first position is any position.

According to an optional implementation of the embodiment of the present disclosure, the training unit is further configured to:
determine the proxy distribution corresponding to the target word segmentation according to the target distribution corresponding to the target word segmentation and the student distribution corresponding to the target word segmentation.

According to an optional implementation of the embodiment of the present disclosure, the training unit is further configured to:
determine a student distribution corresponding to the non-target word segmentation as the proxy distribution corresponding to the non-target word segmentation.

According to an optional implementation of the embodiment of the present disclosure, the training unit is further configured to:

obtain a second loss value according to an error between the target distribution corresponding to the target word segmentation and the proxy distribution corresponding to the target word segmentation;

obtain a third loss value according to an error between the target distribution corresponding to the non-target word segmentation and the proxy distribution corresponding to the non-target word segmentation; and

perform iterative training on the student translation model according to the second loss value and the third loss value, to obtain the target machine translation model.

According to an optional implementation of the embodiment of the present disclosure, the training unit is further configured to:

use a sum of the second loss value and the third loss value as a total loss value of the student translation model; and

perform iterative training on the student translation model according to the total loss value of the student translation model.

According to an optional implementation of the embodiment of the present disclosure, the second processing module 430 is further configured to:

perform word segmentation on the standard translation text to obtain a translation word segmentation sequence, and perform word segmentation on the training source text to obtain an original word segmentation sequence;

obtain a target vocabulary according to the translation word segmentation sequence and the original word segmentation sequence; and

perform one-hot encoding on the translation word segmentation sequence according to the target vocabulary to obtain the standard translation distribution.

According to an optional implementation of the embodiment of the present disclosure, both the teacher model and the student translation model are large language models.

It should be understood that the apparatus embodiments and the foregoing method embodiments may correspond to each other, and reference may be made to the method embodiments for similar description. To avoid repetition, details are not described herein again. Specifically, the apparatus 400 shown in FIG. 4 may perform the method embodiments corresponding to FIG. 2, and the foregoing and other operations and/or functions of the modules in the apparatus 400 are to implement the corresponding procedures in the methods in FIG. 2, respectively, and for the sake of brevity, details are not described herein again.

The apparatus 400 in the embodiments of the present disclosure is described above from the perspective of functional modules with reference to the drawings. It should be understood that the functional modules may be implemented in hardware, or may be implemented by instructions in software, or may be implemented by a combination of hardware and software modules. Specifically, the steps of the method embodiments of the first aspect in the embodiments of the present disclosure may be completed by an integrated logic circuit of hardware in a processor and/or instructions in software form, and the steps of the method of the first aspect disclosed in the embodiments of the present disclosure may be directly embodied as being completed by a hardware decoding processor, or may be completed by a combination of hardware and software modules in a decoding processor. Optionally, the software module may be located in a mature storage medium in the art, such as a random access memory, a flash memory, a read-only memory, a programmable read-only memory, an electrically erasable programmable memory, and a register. The storage medium is located in the memory, and the processor reads information in the memory, and completes the steps in the above method embodiments of the first aspect in conjunction with its hardware.

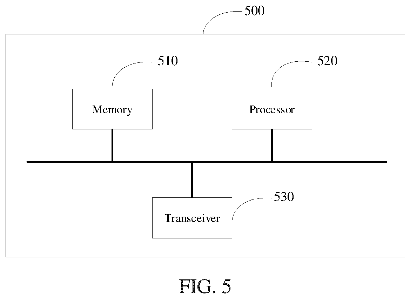

FIG. 5 is a schematic block diagram of an electronic device provided by an embodiment of the present disclosure. As shown in FIG. 5, the electronic device 500 may include:

a memory 510 and a processor 520, where the memory 510 is configured to store a computer program, and transmit the program code to the processor 520. In other words, the processor 520 may invoke and run the computer program from the memory 510, to implement the method for knowledge distillation of the first aspect in the embodiments of the present disclosure.

For example, the processor 520 may be configured to perform the above method for knowledge distillation according to instructions in the computer program.

In some embodiments of the present disclosure, the processor 520 may include but is not limited to: a general-purpose processor, a digital signal processor (Digital Signal Processor, DSP), an application specific integrated circuit (Application Specific Integrated Circuit, ASIC), a field programmable gate array (Field Programmable Gate Array, FPGA) or other programmable logic devices, discrete gate or transistor logic devices, discrete hardware components, etc.

In some embodiments of the present disclosure, the memory 510 includes but is not limited to: a volatile memory and/or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM) which is used as an external cache. By way of example and not limitation, many forms of RAM may be used, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (synch link DRAM, SLDRAM) and a direct memory bus random access memory (Direct Rambus RAM, DR RAM).

In some embodiments of the present disclosure, the computer program may be divided into one or more modules, which are stored in the memory 510 and executed by the processor 520, to complete the knowledge distillation apparatus provided in the present disclosure. The one or more modules may be a series of computer program instruction segments capable of completing a specific function, and the instruction segments are used to describe an execution process of the computer program in the electronic device.

As shown in FIG. 5, the electronic device 500 may further include:
a transceiver 530, which may be connected to the processor 520 or the memory 510.

The processor 520 may control the transceiver 530 to communicate with other devices. Specifically, the transceiver 530 may send information or data to other devices, or receive information or data sent by other devices. The transceiver 530 may include a transmitter and a receiver. The transceiver 530 may further include an antenna, and the number of the antennas may be one or more.

It should be understood that the components in the electronic device are connected through a bus system, and the bus system includes not only a data bus, but also a power bus, a control bus, and a state signal bus.

The present disclosure further provides a computer storage medium. The computer storage medium stores a computer program. When the computer program is executed by a computer, the computer is caused to perform the method for knowledge distillation in the above method embodiments of the first aspect.

Embodiments of the present disclosure further provide a computer program product including program instructions. When the program instructions are run on an electronic device, the electronic device is caused to perform the method for knowledge distillation according to the above method embodiments of the first aspect.

When software is used for implementation, all or some of the method may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a special-purpose computer, a computer network, or other programmable apparatuses. The computer instructions may be stored in a computer-readable storage medium, or may be transmitted from one computer-readable storage medium to another computer-readable storage medium. For example, the computer instructions may be transmitted from a website, a computer, a server, or a data center to another website, a computer, a server, or a data center in a wired (for example, a coaxial cable, an optical fiber, or a digital subscriber line (DSL)) or wireless (for example, infrared, radio, or microwave) manner. The computer-readable storage medium may be any available medium accessible by the computer or a data storage device integrating one or more available media, such as a server or a data center. The available medium may be a magnetic medium (for example, a floppy disk, a hard disk, or a magnetic tape), an optical medium (for example, a digital video disc (DVD)), or a semiconductor medium (for example, a solid-state drive (SSD)).

It should be appreciated by those of ordinary skill in the art that the modules and algorithm steps of the examples described in connection with the embodiments disclosed herein can be implemented in electronic hardware, computer software, or a combination thereof. Whether these functions are performed in hardware or software depends on the specific application and design constraints of the technical solutions. Professionals and technicians may use different methods to implement the described functions for each specific application, but such implementation should not be considered as going beyond the scope of the present disclosure.

In the several embodiments provided in the present disclosure, it should be understood that the disclosed system, apparatus, and method may be implemented in other manners. For example, the apparatus embodiments described above are merely illustrative. For example, the division of the modules is merely a logical function division, and there may be other division manners during actual implementation, for example, multiple modules or components may be combined or integrated into another system, or some features may be ignored, or not performed. In addition, the displayed or discussed mutual coupling or direct coupling or communication connection may be implemented through some interfaces, and the indirect coupling or communication connection of the apparatus or the module may be electrical, mechanical, or in other forms.

The modules described as separate components may or may not be physically separate, and the components displayed as the modules may or may not be physical modules, that is, may be located in one place, or may be distributed to multiple network elements. Some or all of the modules may be selected according to actual needs to achieve the purpose of the solutions of the embodiments. For example, the functional modules in the embodiments of the present disclosure may be integrated into one processing module, or may exist physically alone, or two or more modules may be integrated into one module.

In the embodiments of the present disclosure, the term "module" or "unit" refers to a computer program or a part of a computer program with a predetermined function, and works with other related parts to achieve a predetermined target, and may be implemented entirely or partially by using software, hardware (such as a processing circuit or a memory), or a combination thereof. Likewise, one processor (or multiple processors or memory) may be used to implement one or more modules or units. In addition, each module or unit may be a part of an overall module or unit that includes the function of the module or unit.

The above are merely specific implementations of the present disclosure, but the protection scope of the present disclosure is not limited thereto. Any person skilled in the art may easily conceive of changes or replacements within the technical scope disclosed in the present disclosure, and these changes or replacements shall be covered within the protection scope of the present disclosure. Therefore, the protection scope of the present disclosure shall be subject to the protection scope of the claims.

## Claims

1. A method for knowledge distillation, comprising:

   acquiring (S101) a training source text and a standard translation text corresponding to the training source text;
   inputting (S102) the training source text into a teacher translation model and a student translation model separately, to obtain a teacher distribution output by the teacher translation model and a student distribution output by the student translation model;
   obtaining (S103) a standard translation distribution according to the standard translation text and the training source text; and
   performing (S104) iterative training on the student translation model according to the teacher distribution, the student distribution, and the standard translation distribution, to obtain a target machine translation model.

2. The method according to claim 1, wherein the performing iterative training on the student translation model according to the teacher distribution, the student distribution, and the standard translation distribution, to obtain a target machine translation model comprises:

   obtaining (S104-1) a target distribution according to the teacher distribution and the standard translation distribution; and
   performing (S104-2) iterative training on the student translation model according to the target distribution and the student distribution, to obtain the target machine translation model.

3. The method according to claim 2, wherein the performing iterative training on the student translation model according to the target distribution and the student distribution, to obtain the target machine translation model comprises:

   obtaining a first loss value according to an error between the target distribution and the student distribution;
   selecting a target word segmentation and a non-target word segmentation from a translation word segmentation sequence corresponding to the standard translation text according to the first loss value and a preset threshold;
   determining a proxy distribution corresponding to the target word segmentation and a proxy distribution corresponding to the non-target word segmentation; and
   performing iterative training on the student translation model according to a target distribution corresponding to the target word segmentation and the proxy distribution corresponding to the target word segmentation, and a target distribution corresponding to the non-target word segmentation and the proxy distribution corresponding to the non-target word segmentation, to obtain the target machine translation model.

4. The method according to claim 3, wherein the selecting a target word segmentation and a non-target word segmentation from a translation word segmentation sequence corresponding to the standard translation text according to the first loss value and a preset threshold comprises:

   when a first loss value between a target distribution corresponding to a word segmentation at a first position and a student distribution corresponding to the word segmentation at the first position is greater than the preset threshold, determining a first target position from the translation word segmentation sequence corresponding to the standard translation text according to the first position, and determining the word segmentation located at the first target position as the target word segmentation; and
   when the first loss value between the target distribution corresponding to the word segmentation at the first position and the student distribution corresponding to the word segmentation at the first position is less than or equal to the preset threshold, determining a second target position from the translation word segmentation sequence corresponding to the standard translation text according to the first position, and determining the word segmentation located at the second target position as the non-target word segmentation,

wherein the first position is any position.

5. The method according to claim 3, wherein the determining a proxy distribution corresponding to the target word segmentation comprises:
determining the proxy distribution corresponding to the target word segmentation according to the target distribution corresponding to the target word segmentation and a student distribution corresponding to the target word segmentation.

6. The method according to claim 3, wherein the determining a proxy distribution corresponding to the non-target word segmentation comprises:
determining a student distribution corresponding to the non-target word segmentation as the proxy distribution corresponding to the non-target word segmentation.

7. The method according to claim 3, wherein the performing iterative training on the student translation model according to a target distribution corresponding to the target word segmentation and the proxy distribution corresponding to the target word segmentation, and a target distribution corresponding to the non-target word segmentation and the proxy distribution corresponding to the non-target word segmentation, to obtain the target machine translation model comprises:

obtaining a second loss value according to an error between the target distribution corresponding to the target word segmentation and the proxy distribution corresponding to the target word segmentation;
obtaining a third loss value according to an error between the target distribution corresponding to the non-target word segmentation and the proxy distribution corresponding to the non-target word segmentation; and
performing iterative training on the student translation model according to the second loss value and the third loss value, to obtain the target machine translation model.

8. The method according to claim 7, wherein the performing iterative training on the student translation model according to the second loss value and the third loss value comprises:

using a sum of the second loss value and the third loss value as a total loss value of the student translation model; and
performing iterative training on the student translation model according to the total loss value of the student translation model.

9. The method according to claim 1, wherein the obtaining a standard translation distribution according to the standard translation text and the training source text comprises:

performing word segmentation on the standard translation text to obtain a translation word segmentation sequence, and performing word segmentation on the training source text to obtain an original word segmentation sequence;
obtaining a target vocabulary according to the translation word segmentation sequence and the original word segmentation sequence; and
performing one-hot encoding on the translation word segmentation sequence according to the target vocabulary to obtain the standard translation distribution.

10. The method according to claim 1, wherein both the teacher model and the student translation model are large language models.

11. A knowledge distillation apparatus, comprising:

a sample acquiring module (410), configured to acquire a training source text and a standard translation text corresponding to the training source text;
a first processing module (420), configured to input the training source text into a teacher model and a student translation model separately, to obtain a teacher distribution output by the teacher model and a student distribution output by the student translation model;
a second processing module (430), configured to obtain a standard translation distribution according to the standard translation text and the training source text; and
a knowledge distillation module (440), configured to perform iterative training on the student translation model according to the teacher distribution, the student distribution, and the standard translation distribution, to obtain a target machine translation model.

12. An electronic device, comprising:
a processor (520) and a memory (510), wherein the memory is configured to store a computer program, and the processor is configured to invoke and run the computer program stored in the memory, to perform the method for knowledge distillation according to any one of claims 1 to 10.

13. A computer-readable storage medium, for storing a computer program, wherein the computer program causes a computer to perform the method for knowledge distillation according to any one of claims 1 to 10.

14. A computer program product comprising program instructions, when the program instructions are run on an electronic device, the electronic device is caused to perform the method for knowledge distillation according to any one of claims 1 to 10.

| Training source text | → | Teacher translation model | → | Teacher distribution | ⤏ |
|---|---|---|---|---|---|

Target distribution

Standard translation distribution

Student translation model → Student distribution ⤏ Proxy distribution

**FIG. 1**

Acquire a training source text and a standard translation text corresponding to the training source text — S101

Input the training source text into a teacher translation model and a student translation model separately, to obtain a teacher distribution output by the teacher translation model and a student distribution output by the student translation model — S102

The standard translation distribution is obtained according to the standard translation text and the training source text — S103

Perform iterative training on the student translation model according to the teacher distribution, the student distribution, and the standard translation distribution, to obtain a target machine translation model — S104

**FIG. 2**

Obtain a target distribution according to the teacher distribution and the standard translation distribution — S104-1

Perform iterative training on the student translation model according to the target distribution and the student distribution, to obtain the target machine translation model — S104-2

FIG. 3

400

Sample acquiring module — 410

First processing module — 420

Second processing module — 430

Knowledge distillation module — 440

FIG. 4

FIG. 5

Europäisches
Patentamt
European
Patent Office
Office européen
des brevets

# EUROPEAN SEARCH REPORT

**Application Number**

EP 25 15 5152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RISHABH AGARWAL ET AL: "GKD: Generalized Knowledge Distillation for Auto-regressive Sequence Models", ARXIV.ORG, CORNELL UNIVERSITY LIBRARY, 201 OLIN LIBRARY CORNELL UNIVERSITY ITHACA, NY 14853, 23 June 2023 (2023-06-23), XP091545836, * abstract * * sections 1, 4, 4,1, and 5.2 * | 1-14 | INV. G06F40/30 G06F40/44 G06N3/08 |
| A | Geoffrey Hinton ET AL: "Distilling the Knowledge in a Neural Network", , 9 March 2015 (2015-03-09), XP055540856, Retrieved from the Internet: URL:https://arxiv.org/pdf/1503.02531.pdf [retrieved on 2015-06-10] * the whole document * | 1-14 | |
| A | US 2022/180202 A1 (YIN YICHUN [CN] ET AL) 9 June 2022 (2022-06-09) * the whole document * | 1-14 | TECHNICAL FIELDS SEARCHED (IPC) |
| A | POURANSARI HADI ET AL: "Extracurricular Learning: Knowledge Transfer Beyond Empirical Distribution", 2021 IEEE/CVF CONFERENCE ON COMPUTER VISION AND PATTERN RECOGNITION WORKSHOPS (CVPRW), IEEE, 19 June 2021 (2021-06-19), pages 3026-3036, XP033967238, DOI: 10.1109/CVPRW53098.2021.00338 [retrieved on 2021-08-25] * the whole document * | 1-14 | G06F G06N |

The present search report has been drawn up for all claims

| Place of search | Date of completion of the search | Examiner |
|---|---|---|
| Berlin | 13 June 2025 | Abram, Robert |

EPO FORM 1503 03.82 (P4C01)

# EP 4 672 080 A1

## ANNEX TO THE EUROPEAN SEARCH REPORT
## ON EUROPEAN PATENT APPLICATION NO.

EP 25 15 5152

13-06-2025

| Patent document cited in search report | Publication date | Patent family member(s) | Publication date |
|---|---|---|---|
| US 2022180202 A1 | 09-06-2022 | CN 112487182 A | 12-03-2021 |
| | | CN 118349673 A | 16-07-2024 |
| | | EP 4024232 A1 | 06-07-2022 |
| | | US 2022180202 A1 | 09-06-2022 |
| | | US 2025139359 A1 | 01-05-2025 |
| | | WO 2021047286 A1 | 18-03-2021 |

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410825002